# EUROPEAN PATENT APPLICATION

(11) **EP 2 428 409 A1**
(43) Date of publication of application: **14.03.2012**
(21) Application number: 11190743.2
(22) Date of filing: 16.10.2009
(51) Int. Cl.: B60R 16/037, B60R 25/00, G07C 9/00, H04L 29/06, G07C 5/00

(54) **Vehicle biometric system and method**

(30) Priority: 17.10.2008 US 253645
(62) Divisional of application: 09821320.0
(71) Applicant: Toyota Motor Sales, U.S.A., Inc., Torrance, CA 90501 (US)
(72) Inventor: Pisz, James T., CALIFORNIE, 92648 (US); Avary, Michelle L., Los Angeles, California 90068 (US)
(74) Representative: Kling, Simone

(57) **Abstract**

A vehicle biometric system (20) includes an in-vehicle telematics unit (32) having a receiver configured to receive authentication data from a wireless communication device (28), a memory configured to store computer program instructions, and a processor configured to access and execute the computer program instructions. The authentication data can include voice data based on a vocal input received at the wireless communication device from a requesting user (24). The executed computer program instructions can cause the processor to analyze the received authentication data to make a determination as to whether the vocal input is that of an authorized user of the vehicle, and based on a positive determination that the vocal input is that of the authorized user, to initiate a vehicle function in response to the vocal input.

## Description

### BACKGROUND INFORMATION

Secure vehicle-control and personalized-settings access can be desirable features of a vehicle. Some systems that have typically been used to provide some of these features include hardwired systems such as, e.g., hardwired in-vehicle alarms and seat and mirror memory systems. However, such systems can be inflexible and may not offer enough features to be sufficiently attractive to vehicle users.

Another system that may provide some secure-access features includes the use of a wireless key fob to access vehicle functions and personalized settings. However, a number of problems exist with this type of system as well. For example, the wireless key fob may provide no other functionality to the user, and can thus be an inefficient device that the user may not wish to use. Furthermore, in part due to its limited functionality, the wireless key fob may be susceptible to being lost and needing replacement, potentially resulting in high cost for the user, which can also be undesirable. The wireless key fob may also not be adaptable for use in varying situations. For example, the wireless key fob may only function in association with a single vehicle. As such, a vehicle user associated with a plurality of different vehicles may need to use a plurality of different wireless key fobs, which is further inefficient and undesirable. Additionally, wireless key fobs may not provide a level of security typically desired by many vehicle users. As an example, wireless key fobs are typically not capable of preventing vehicle-control access in the case of theft of the wireless key fob.

### BRIEF DESCRIPTION OF THE DRAWINGS

So that the features of the present invention can be understood, a number of drawings are described below. It is to be noted, however, that the appended drawings illustrate only particular embodiments of the invention and are therefore not to be considered limiting of its scope, for the invention may encompass other equally effective embodiments.

FIG. 1 is a schematic diagram depicting an embodiment of a vehicle biometric system.

FIG. 2 is a flow diagram depicting an embodiment of operating states of the vehicle biometric system.

FIG. 3 is a schematic diagram depicting embodiments of a wireless communication device, an in-vehicle telematics unit and a remote server of the vehicle biometric system.

FIG. 4 is a schematic diagram depicting an embodiment of a user interface of the wireless communication device or the in-vehicle telematics unit.

FIG. 5 is a schematic diagram depicting an embodiment of a transceiver of the wireless communication device or the in-vehicle telematics unit.

FIG. 6 is a flowchart depicting an embodiment of a method involving the vehicle biometric system.

FIG. 7 is a flowchart depicting an embodiment of another method involving the vehicle biometric system.

FIGS. 8A-8D depict embodiments of a touch-screen display of the wireless communication device during operation of the vehicle biometric system.

### DETAILED DESCRIPTION OF EXAMPLE EMBODIMENTS

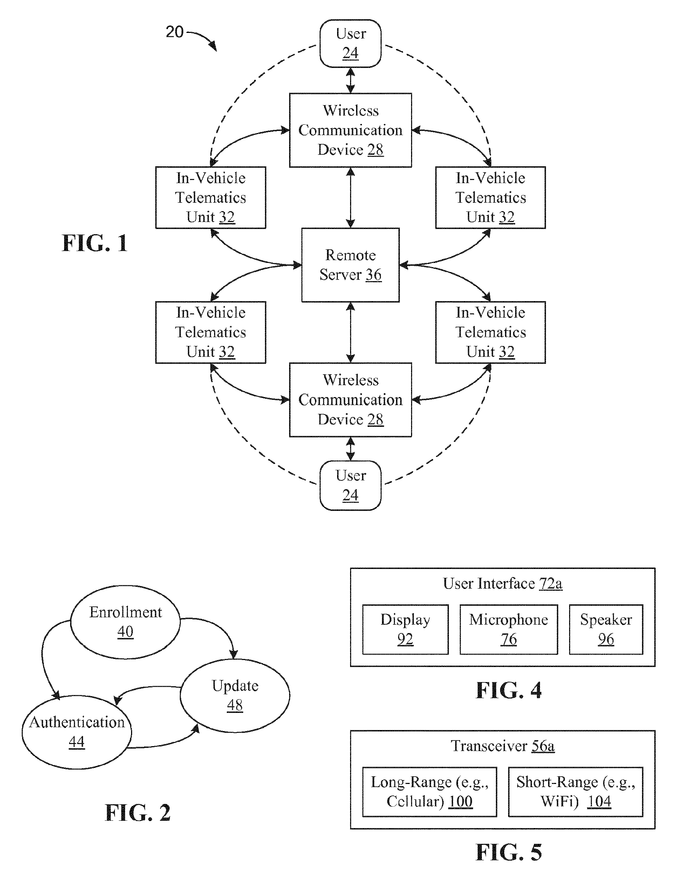

FIG. 1 depicts an embodiment of a vehicle biometric system 20 configured to authenticate a user 24, using a wireless communication device 28, for access to control-functions of a vehicle. An authenticated authorized user 24 can access vehicle control functions such as, e.g., unlocking of doors and implementing of personalized vehicle settings such as, e.g., related to drive operation, audio, heating, ventilation, air conditioning, etc. Other vehicle control functions, in addition to the exemplary functions discussed herein, can also be accessed upon authentication of an authorized user 24. The vehicle biometric system 20 is configured to use a biometric measure to authenticate the user 24. As specifically discussed in detail herein, the vehicle biometric system 20 can be configured to use a voice biometric to authenticate an authorized user 24. However, other biometric measures can also be used, such as fingerprints, iris patterns, facial features, etc. The vehicle can be owned, leased, rented, or in any other way associated with the user 24. As depicted in FIG. 1, the vehicle biometric system 20 can optionally be configured to enable authentication, for vehicle function-control access, of a plurality of different users 24 associated with a plurality of different vehicles.

The wireless communication device 28 is configured to be capable of communicating with an in-vehicle telematics unit 32 (of the vehicle) and a remote server 36. The wireless communication device 28 can be any type of device that is capable of wireless voice communication and of being used in a mobile manner by the user 24. The wireless communication device 28 can optionally be configured to be held in one hand of the user 24 while being operated. Exemplary embodiments of the wireless communication device 28 include a cell phone, a mobile phone, a personal digital assistant (PDA) having voice communication features, an iPhone, a smart phone, and other suitable devices. Use of the wireless communication device 28 in the vehicle biometric system 20 can eliminate the need for the user 24 to carry an inefficient and insecure key fob, and can thus potentially provide a more personalized and efficient vehicle-control experience for the user 24, as the wireless communication device 28 can typically also provide other functionality to the user 24, such as voice communication, appointments scheduling, music playing, etc. Note that, in some embodiments, the vehicle biometric system 20 can be configured so that the user 24 can optionally additionally use a wired, or non-mobile, communication or computing device, such as a personal computer, the in-vehicle telematics unit 32, or both, to perform some or all of the aspects of the vehicle function-control access discussed herein as performed using the wireless communication device 28.

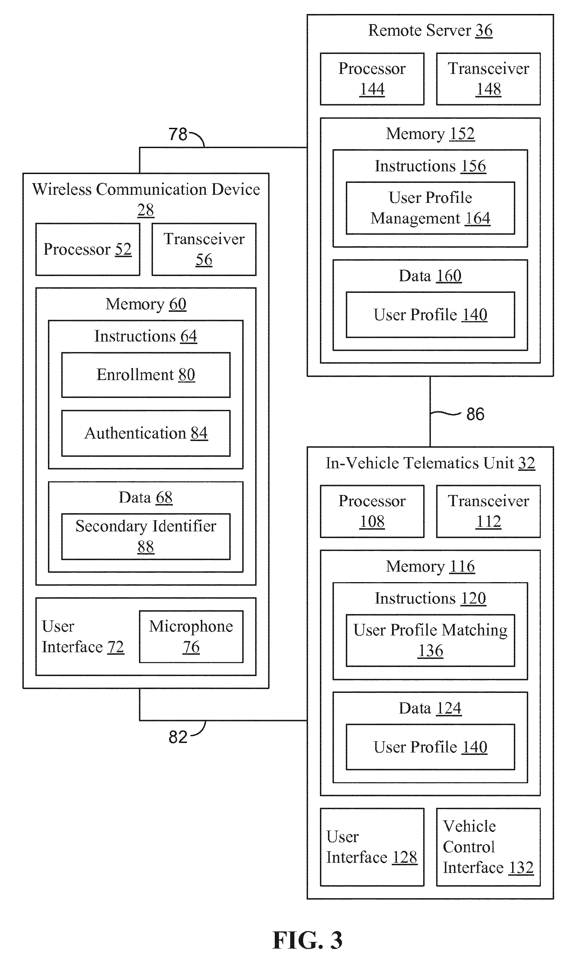

FIG. 2 is a flow diagram depicting an embodiment of operational states of the vehicle biometric system 20. The operational states include an enrollment state 40, an authentication state 44, and an update state 48. In the enrollment sate 40, the user 24 can enroll in the vehicle biometric system 20 to create a user profile 140 (shown in FIG. 3), which is subsequently used by the system 20 in the authentication 44 state to authenticate an authorized user 24, by submitting enrollment data to the system 20. The enrollment data includes biometric data such as, e.g., voice data, and the user profile is generated as a function of the submitted biometric data. The user profile 140 can also optionally be created as a function of other data, such as a secondary identifier 88 (shown in FIG. 3) that can uniquely identify the user's wireless communication device 28 or associated vehicle, and an initial set of personalized vehicle settings. In the authentication state 44, the user 24 can request access to vehicle-control functions, such as vehicle access and personalized settings. During the authentication state 44, the vehicle biometric system 20 receives a biometric input such as, e.g., a vocal input, from the requesting user 24 and attempts to match the received biometric input with biometric data stored in the user profile 140 during the enrollment state 42. Upon a successful match, the user 24 is provided with access to the requested vehicle-control function. In the update state 48, the user 24 can modify the user's profile 140, including modifying the biometric data used to generate the profile 140, and any definitions of vehicle-control functions or personalized vehicle settings that can be accessed upon authentication. In FIG. 2, the enrollment state 40 can be entered first, and upon completion of enrollment (i.e., user profile generation) by the user 24, the system 20 can enter either the authentication 44 or update states 48, depending upon input from the user 24. From the authentication state 44, the system 20 can enter the update state 48, and from the update state 48, the system 20 can enter the authentication state 44.

FIG. 3 depicts embodiments of the wireless communication device 28, the remote server 36, and the in-vehicle telematics unit 32 of the vehicle biometric system 20. As depicted, the wireless communication device 28 includes a processor 52, a transceiver 56, a memory 60 and a user interface 72. The memory 60 is configured to store computer program instructions 64 and data 68. The processor 52 is configured to access the computer program instructions 64 and data 68 stored in the memory 60, and execute the computer program instructions 64 to control the wireless communication device 28 to perform the functionality discussed herein. The transceiver 56 can be configured to transmit data from the wireless communication device 28 and receive data at the wireless communication device 28, and can include a transmitter portion and a receiver portion. The user interface 72 includes a microphone 76 configured to receive vocal input from the user 24. The data 68 stored in the memory 60 can include the secondary identifier 88 that uniquely identifies the wireless communication device 28, the vehicle associated with the user 24, or both. The secondary identifier 88 can include one or more of a telephone number of the wireless communication device 28, a manufacturer's serial number of the wireless communication device 28, or a vehicle identification number (VIN) of the vehicle.

The computer program instructions 64 stored in the memory 60 of the wireless communication device 28, as depicted in FIG. 3, include a set of enrollment instructions 80 and a set of authentication instructions 84. The processor 52, when executing the enrollment instruction set 80, controls the wireless communication device 28 to receive vocal input from the user 24, generate enrollment data (including enrollment voice data) as a function of the received vocal input, and communicate the enrollment data to the remote server 36. The enrollment instruction set 80 can also be configured to control the wireless communication device 28 to communicate the enrollment data to the in-vehicle telematics unit 32. The processor 52, when executing the authentication instruction set 84, controls the wireless communication device 28 to receive vocal input from the user 24, generate authentication data (including authentication voice data) as a function of the received vocal input, and communicate the authentication data to the in-vehicle telematics unit 32. The authentication instruction set 84 can also be configured to control the wireless communication device 28 to communicate the authentication data to the remote server 36. Note that, although FIG. 3 explicitly depicts the enrollment and authentication instruction sets 80, 84, the computer program instructions 64 overall can include any instructions necessary to be executed by the processor 52 to cause the wireless communication device 28 to perform its functionality described herein.

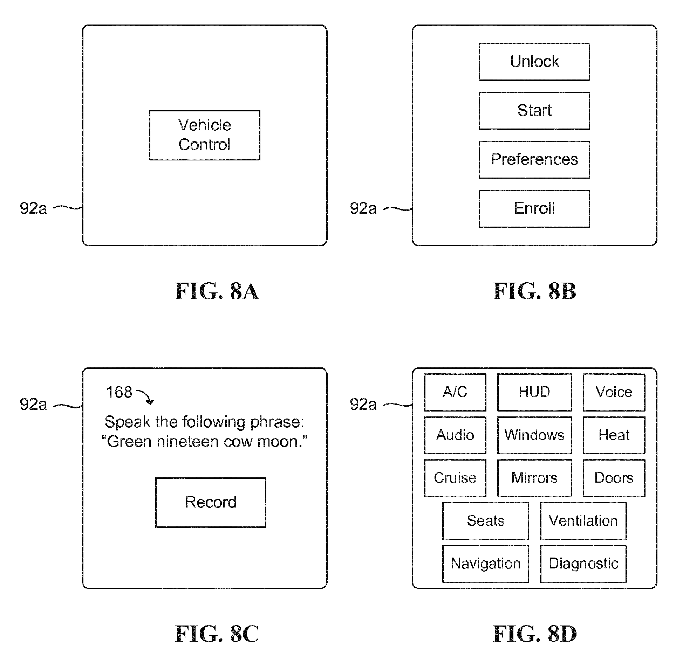

The user input interface 72 of the wireless communication device 28 can optionally include further components. FIG. 4 depicts another embodiment of the user input interface 72a that includes, in addition to the microphone 76, a display 92 and a speaker 96. The display 92 can be configured to display visual information to the user 24, and the speaker 96 can be configured to provide auditory output to the user 24. For example, the display 92 and speaker 96 can be used to provide instructions to the user 24 during the enrollment, authentication and update states 40, 44, 48. The display 92 can optionally be a touch-screen display 92a (shown in FIGS. 8A-8D) configured to receive tactile input from the user 24, and the microphone 76 is configured to receive vocal input from the user 24. For example, the touch-screen display 92a and the microphone 76 can be used to receive requests or other input from the user during the enrollment, authentication and update states 40, 44, 48.

During the enrollment state 40, the wireless communication device 28, as controlled by the processor 52 executing the enrollment instruction set 80, communicates enrollment data to the remote server 36 (or optionally alternatively to the in-vehicle telematics unit 32). The enrollment data can include either a completely generated user profile 140 (which can be used for matching in a subsequent authentication state 44) or voice data that can be used by the remote server 36 (or in-vehicle telematics unit 32) to generate the user profile 140. During the authentication state 44, the wireless communication device 28, as controlled by the processor 52 executing the authentication instruction set 84, communicates authentication data to the in-vehicle telematics unit 32 (or optionally alternatively to the remote server 36). The authentication data includes voice data that can be used by the in-vehicle telematics unit 32 (or remote server 36) to perform a matching operation comparing characteristics of the vocal input received at the wireless communication device 28 to voice data in a particular user profile 140.

The processor 52 (as controlled by the enrollment and authentication instruction sets 80, 84) can determine what type of enrollment and authentication data to generate. The determination of the precise form of the enrollment data can be a function of one or more of the hardware configuration of the wireless communication device 28 (such the speed of the processor 52, the size of the memory 60, etc.), the configuration of a communication channel 78 between the wireless communication device 28 and the remote server 36 (such as the bandwidth of the communication channel 78, the data transfer speed of the communication channel 78, etc.), or the hardware configuration of the remote server 36 in comparison to that of the wireless communication device 28. The determination of the precise form of the authentication data can be a function of one or more of the hardware configuration of the wireless communication device 28 (processor speed, memory size, etc.), the configuration of a communication channel 82 between the wireless communication device 28 and the in-vehicle telematics unit 32 (bandwidth, data transfer speed, etc.), or the hardware configuration of the in-vehicle telematics unit 32 in comparison to that of the wireless communication device 28.

As part of enrollment, the wireless communication device 28 receives an enrollment request from the user 24. The enrollment request can be in the form of a vocal or tactile input from the user at the user interface 72. For example, the enrollment request can take the form of the user 24 saying "enroll new user," or some other suitable vocal command. The enrollment request can also take the form of the user 24 pressing one or more buttons of the user interface 72 such as, e.g., a portion of the touch-screen display 92a. The processor 52, under control of the enrollment instruction set 80, processes the received vocal input to detect the enrollment request and generate the enrollment data as a function of the received vocal input. The enrollment data includes enrollment voice data generated by the processor 52 by processing the vocal input.

As part of authentication, the wireless communication device 28 receives an authentication request from the user 24. The authentication request can be in the form of a vocal or tactile input from the user 24 at the user interface 72. For example, the authentication request can take the form of the user 24 requesting access the vehicle, such as by saying "unlock vehicle," or some other suitable vocal command. The authentication request can also take the form of the user pressing one or more buttons of the user interface 72 such as, e.g., a portion of the touch-screen display 92a. The processor 52, under control of the authentication instruction set 84, processes the received vocal input to detect the authentication request and generate the authentication data as a function of the received vocal input. The authentication data includes authentication voice data generated by the processor 52 by processing the vocal input.

The vocal input processed by the processor 52 to generate the enrollment and authentication voice data can include the initial enrollment or authentication vocal request, a subsequent vocalization by the user 24, or both. The subsequent vocalization can be processed to potentially increase the accuracy with which the generated voice data captures unique vocal characteristics of the user's voice. The wireless communication device 28, under control of the authentication and enrollment instruction sets 80, 84, can prompt the user 24, via the user interface 72, for the subsequent vocalization by, e.g., playing an auditory instruction through the speaker 96 or displaying a visual instruction 168 (shown in FIG. 8C) on the display 92. The prompt can include a test phrase that the user is instructed to vocalize. The processor 52 can then process the initial enrollment or authentication vocal request, the subsequent vocalization, or both, to generate the enrollment and authorization voice data.

The processor 52 can process vocal input to generate the enrollment or authentication voice data in a number of different ways, depending on a determination by the processor 52, under control of the enrollment and authentication instruction sets 80, 84, as to the division of vocal data processing between the wireless communication device 28 and the in-vehicle telematics unit 32 or remote server 36.

To enable secure authentication, the vocal input is processed to generate a measure of its unique characteristics. The shape of the user's mouth and throat create unique vocal characteristics that make a particular user's voice sound different than another user's voice. These characteristics are unique to, and can be used to identify and authenticate, a particular user 24. The vehicle biometric system 20 can capture and store a measure of the unique vocal characteristics of a particular user 24 during the enrollment and authentication states by, e.g., performing feature extraction on received vocal input. During the enrollment state 40, extracted features can be used to create the user profile 140, and subsequently, during the authentication state 44, extracted features can be used to perform a comparison of the characteristics of the enrollment vocal input to characteristics of the authentication vocal input to determine if the user 24 requesting authentication is the same as the user 24 who generated a particular user profile 140 during enrollment.

In any of the scenarios including generating a complete user profile 140 for transmission to the remote server 36 during the enrollment state 40, generating enrollment voice data that can be subsequently used by the remote server 36 to generate the complete user profile 140, generating authorization voice data for transmission to the in-vehicle telematics unit 32 during the authentication state 44, or in various other scenarios, the processor 52 can perform feature extraction or partial feature extraction on received vocal input under control of the authentication and enrollment instruction sets 80, 84 to generate a plurality of feature vectors. Each feature vector can contain a plurality of parameters that are a measure of the unique vocal characteristics for a particular time period during the corresponding vocal input. The plurality of feature vectors, spread over time, provide a measure of the unique vocal characteristics of the vocal input as a function of time. The parameters of the feature vectors can include one or more of cepstrum coefficients, mel-cepstrum coefficients, delta-mel-ceptrum coefficients, line spectral pairs, reflection coefficients, or log area ratio coefficients. The processor 52 can process the received vocal input to generate the parameters and feature vectors, and in such a scenario the transmitted user profile 140, enrollment voice data, authentication voice data, or any combination of these, can include the generated feature vectors. In some embodiments, for example when the processor 52 makes a corresponding determination regarding the capability or suitability of the wireless communication device 28 to completely generate the plurality of feature vectors, the processor 52 can instead partially process the received vocal input to partially generate the parameters and feature vectors, and in such a scenario the enrollment voice data, authentication voice data, or both, can include the partially-generated feature vectors.

Alternatively or in addition to generating or partially generating feature vectors, and potentially in response to a determination by the processor 52 regarding the processing speed of the processor 52 or the size of the memory 60, or the bandwidth or data transmission rate of communication channels 78, 82 between wireless communication device 28 and the remote server 36 and the in-vehicle telematics unit 32, the processor 52 can instead create authentication and enrollment voice data that includes a digitized and encoded representation of the vocal input for transmission to the remote server 36 or in-vehicle telematics unit 32. For example, the wireless communication device 28 can include an analog-to-digital converter (DAC), either separately from or as part of the processor 52, to convert an analog vocal input received at the microphone 76 to a first digital representation such as, e.g., an uncompressed discrete time representation. The processor 52 can then optionally convert the first digital representation to a second digital representation which is an encoded version of the first digital representation. The second digital representation can be encoded to reflect a further digital processing of the representation of the vocal input such as to, e.g., compress the first digital representation to create a compressed second digital representation that is potentially easier to store and transmit, or filter or otherwise process the first digital representation to create a reduced-noise second digital representation that has a reduced noise measure in comparison to the first digital representation. The processor 52 can also optionally perform a digital encryption to create an encrypted second digital representation. The authentication and enrollment voice data can thus include, either in addition to or instead of the extracted or partially extracted feature vectors, a digital representation of the vocal input which is any combination of digitized, encoded, compressed or encrypted.

The processor 52, executing the enrollment instructions 80, controls the transceiver 56 of the wireless communication device 28 to transmit the enrollment data to the remote server 36 (or optionally the in-vehicle telematics unit 32). As described above, the enrollment data includes enrollment voice data, and can also include one or more of secondary identifier data based on a secondary identifier 88 stored in the memory 60 of the wireless communication device 28, and an initial set of user vehicle preferences. The processor 52, executing the authentication instructions 84, controls the transceiver 56 of the wireless communication device 28 to transmit the authentication data to the in-vehicle telematics unit 32 (or optionally the remote server 36). As described above, the authentication data includes authentication voice data, and can also include the secondary identifier data based on the secondary identifier 88 stored in the memory 60 of the wireless communication device 28. The processor 52 can optionally process the secondary identifier 88 stored in the memory 60 of the wireless communication device 28 to create the secondary identifier data of the enrollment and authentication data. For example, the processor 52 can optionally encode or encrypt the secondary identifier 88 to create the secondary identifier data.

The transceiver 56 of the wireless communication device 28 is configured to communicate with both the remote server 36 and the in-vehicle telematics unit 32. FIG. 5 depicts one embodiment of the transceiver 56a that includes a long-range transceiver portion 100 and a short-range transceiver portion 104. The wireless communication device 28 can be configured to use the long-range transceiver portion 100 to transmit the enrollment or authentication data to the remote server 36 via a long-range communication channel. (The wireless communication device 28 can also optionally be configured to communicate data to the in-vehicle telematics unit 32 using the long-range transceiver portion 100.) The long-range transceiver portion 100 can be a cellular transceiver portion configured to communicate with the remote server 36 (or in-vehicle telematics unit 32) via a cellular communication channel. The long-range transceiver portion 100 can be configured to communicate using cellular transmission protocols including one or more of a code division multiple access (CDMA) cellular protocol, a second generation (2G) cellular protocol such as the Global System for Mobile communication (GSM) protocol, a third generation (3G) cellular protocol such as the Universal Mobile Telecommunications System (UMTS) protocol, or any other suitable cellular transmission protocol. The communication channel 78 between the wireless communication device 28 and the remote server 32 (and optionally the communication channel 82 between the wireless communication device 28 and the in-vehicle telematics unit 32) can thus be a cellular communication channel. The long-range transceiver portion 100 can optionally instead or additionally be configured to operate according to a Worldwide Interoperability for Microwave Access (WiMAX) (i.e., Institute of Electrical and Electronic Engineers-IEEE-802.16-2004 standard) communication protocol, or any other suitable long-range communication protocol.

The wireless communication device 28 can be configured to use the short-range transceiver portion 104 to transmit the enrollment or authentication data to the in-vehicle telematics unit 32 via a short-range communication channel. The short-range transceiver portion 104 can be a Wi-Fi transceiver portion configured to communicate with the in-vehicle telematics unit 32 via a Wi-Fi communication channel. The short-range transceiver portion 104 can be also be an IEEE 802.11-standard based wireless local area network (WLAN) transceiver portion configured to communicate with the in-vehicle telematics unit 32 via an 802.11-based communication channel. Thus, the communication channel 82 between the wireless communication device 28 and the in-vehicle telematics unit 32 can be a Wi-Fi or 802.11 communication channel. The short-range transceiver portion 104 can optionally instead or additionally be configured to operate according to a Bluetooth communication protocol, or any other suitable short-range communication protocol.

In one embodiment, the long-range transceiver portion 100 is configured to operate in association with intermediate re-transmission components, and the short-range transceiver portion 104 is configured to operate without using intermediate re-transmission components. For example, cellular and WiMAX transceivers can both communicate first to an intermediate re-transmission component such as, e.g., a base-station, which then retransmits the transmission to its final destination. Thus, the transmission of enrollment or authentication data in the vehicle biometric system 20, using the long-range transceiver portion 100, can originate from the wireless communication device 28, arrive at an intermediate re-transmission component such as a base station, and then be re-transmitted to the remote server 36 or in-vehicle telematics unit 32. By contrast, Wi-Fi, 802.11 and Bluetooth transceivers can communicate directly from an origination point to a destination point. Thus, the transmission of enrollment or authentication data in the vehicle biometric system 20, using the short-range transceiver portion 104, can originate at the wireless communication device 28 and arrive directly at the in-vehicle telematics unit 32 without first passing through an intermediate re-transmission component.

Returning to FIG. 3, the depicted in-vehicle telematics unit 32 includes a processor 108, a transceiver 112, a memory 116 (configured to store computer program instructions 120 and data 124), a user interface 128 and a vehicle control interface 132. The processor 108 is configured to access the computer program instructions 120 and data 124 stored in the memory 116, and execute the computer program instructions 120 to control the in-vehicle telematics unit 32 to perform the functionality described herein. The transceiver 112 is configured to communicate with the wireless communication device 28 and the remote server 36. The transceiver 112 can include long-range and short-range transceiver portions, having the properties of the long-range and short-range transceiver portions 100, 104 discussed in regard to the transceiver 56 of the wireless communication device 28. In one embodiment, the transceiver 112 of the in-vehicle telematics unit 32 can have the same schematic representation as depicted in FIG. 5 for the transceiver 56a of the wireless communication device 28. The user interface 128 is configured to receive input from and provide output to the user 24 inside the vehicle. The user interface 128 can optionally include one or more of a display, a speaker and a microphone. In one embodiment, the user interface 128 of the in-vehicle telematics unit 32 can have the schematic representation as depicted in FIG. 4 for the user interface 72a of the wireless communication device 28. The vehicle control interface 132 is configured to interface with vehicle components to implement requested vehicle control functions upon an authentication of a requesting user 24 by the vehicle biometric system 20.

The computer program instructions 120 of the in-vehicle telematics unit 32 include a user-profile matching instruction set 136, which when executed by the processor 108, can cause the in-vehicle telematics unit 32 to receive the authentication data from the wireless communication device 28 and perform a matching operation to compare the received authentication data with data of the user profile 140 stored in the memory 116 of the in-vehicle telematics unit 32. The user-profile matching instruction set 136 can also be configured to control the in-vehicle telematics unit 32 to request an additional user profile 140 from the remote server 36 in the case of the authentication data received at the in-vehicle telematics unit 32 not matching the user profile 140 stored in the memory 116 of the in-vehicle telematics unit 32. Note that, although FIG. 3 explicitly depicts the user-profile matching instruction set 136, the computer program instructions 120 of the in-vehicle telematics unit 32 overall can generally include any instructions necessary to be executed by the processor 108 of the in-vehicle telematics unit 32 to cause it to perform functionality described herein. For example, in a scenario in which the wireless communication device 28 communicates the enrollment data to the in-vehicle telematics unit 32, the computer program instructions 120 of the in-vehicle telematics unit can be configured to cause the processor 108 of the in-vehicle telematics unit 32 to itself generate the user profile 140 from the received enrollment data or control the transceiver 112 of the in-vehicle telematics unit 32 to re-transmit the enrollment data to the remote server 36 for generation of the user profile 140 at the remote server 36.

In FIG. 3, the depicted remote sever 36 includes a processor 144, a transceiver 148, and a memory 152 (configured to store computer program instructions 156 and data 166). The processor 144 is configured to access the computer program instructions 156 and data 160 stored in the memory 152, and execute the computer program instructions 156 to control the remote server 36 to perform the functionality described herein. The transceiver 148 is configured to communicate with the wireless communication device 28 and the in-vehicle telematics unit 32. The transceiver 148 can include a long-range transceiver portion having the properties of the long-range transceiver portion 100 discussed in regard to the wireless communication device 28.

The computer program instructions 156 include a user-profile management instruction set 164, which when executed by the processor 144, can cause the remote server 36 to receive the enrollment data from the wireless communication device 28, generate the user profile 140 from the enrollment data if the enrollment data does not include a complete user profile 140, and transmit the generated user profile 140 to the in-vehicle telematics unit 32. The user-profile management instruction set 164 can also be configured to control the remote server 36 to receive a request for an additional user profile 140 from the in-vehicle telematics unit 32, and respond to the request by transmitting the additional user profile 140, stored in the memory 152 of the remote server 36, to the in-vehicle telematics unit 32. Note that, although FIG. 3 explicitly depicts the user-profile management instruction set 164, the computer program instructions 156 of the remote server 36 overall can generally include any instructions necessary to be executed by the processor 144 of the remote server 36 to cause the remote server 36 to perform functionality described herein. For example, in a scenario in which the wireless communication device 28 communicates the authentication data to the remote server 36, the computer program instructions 156 of the remote server 36 can be configured to cause the processor 144 to control the remote server 36 to either authenticate the user request and transmit a result of the authentication to the in-vehicle telematics unit 32, or re-transmit the authentication data to the in-vehicle telematics unit 32 for authentication at the in-vehicle telematics unit 32.

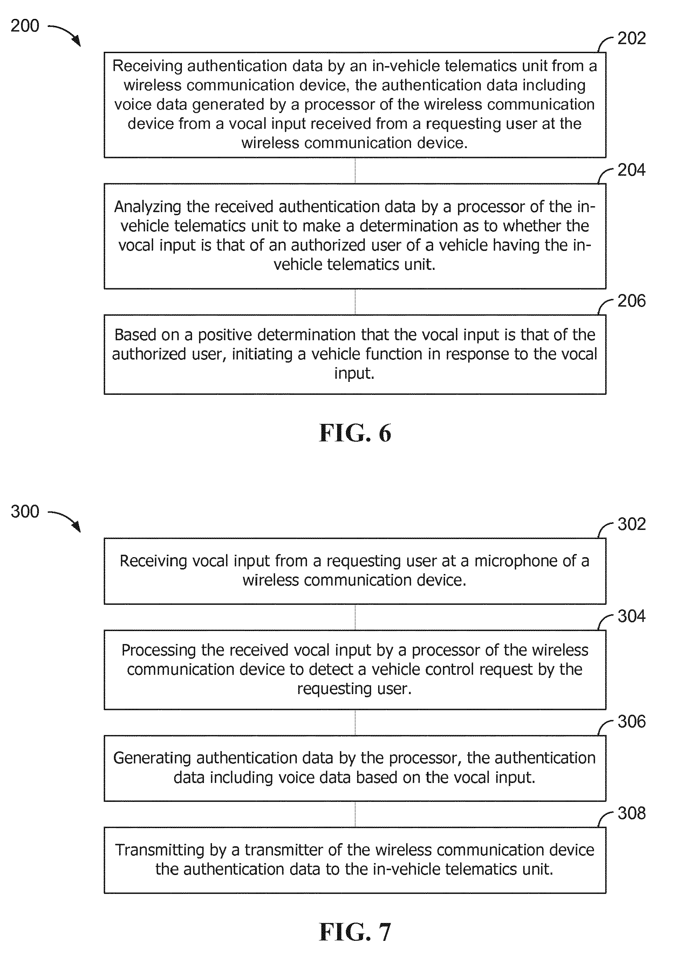

FIG. 6 depicts an embodiment of a method 200 involving the vehicle biometric system 20. In step 202, the method 200 includes receiving the authentication data by the in-vehicle telematics unit 32 from the wireless communication device 28, the authentication data including the authentication voice data generated by the processor 52 of the wireless communication device 28 from the vocal input received at the wireless communication device 28 from the requesting user 24. In step 204, the method 200 includes analyzing the received authentication data by the processor 108 of the in-vehicle telematics unit 32 to make the determination as to whether the vocal input is that of an authorized user of a vehicle having the in-vehicle telematics unit 32. In step 206, the method 200 includes initiating, based on a positive determination that the vocal input is that of the authorized user 24, a vehicle function in response to the vocal input. Note that although FIG. 6 depicts an exemplary embodiment of the method 200, other embodiments of the method 200 can also include additional steps corresponding to any of the functionality of the vehicle biometric system 20 discussed herein.

FIG. 7 depicts an embodiment of another method 300 involving the vehicle biometric system 20. In step 302, the method 300 includes receiving the vocal input from the requesting user 24 at the microphone 76 of the wireless communication device 28. In step 304, the method 300 includes processing the received vocal input by the processor 52 of the wireless communication device 28 to detect the vehicle control request by the requesting user 24. In step 306, the method 300 includes generating the authentication data by the processor 52, the authentication data including the authentication voice data based on the vocal input. In step 308, the method 300 includes transmitting by the transceiver 56 of the wireless communication device 28 the authentication data to the in-vehicle telematics unit 32. Note that although FIG. 7 depicts an exemplary embodiment of the method 300, other embodiments of the method 300 can also include steps corresponding to any of the functionality of the vehicle biometric system 20 discussed herein.

FIGS. 8A-8D depict exemplary embodiments of the touch-screen display 92a of a version of the user interface 72 of the wireless communication device 28 during the use of the vehicle biometric system20, including at various times during the enrollment, authentication and update states 40, 44, 48. FIG. 8A depicts an exemplary display configuration, or screen-shot, of the touch-screen display 92a of the wireless communication device, the depicted configuration having a button, labeled "Vehicle Control," configured to receive tactile input from the user 24 to activate further portions of the enrollment, authentication and update states 40, 44, 48. (Note that the various button labels depicted in FIGS. 8A-8D are exemplary, and other embodiments of button labels are possible.)

FIG. 8B depicts another exemplary display configuration of the touch-screen display 92a, the depicted configuration having buttons labeled "Unlock," "Start," "Preferences" and "Enroll." The "Unlock" button is configured to receive tactile input from the user 24 to initiate a vehicle unlock request with the vehicle biometric system 20. The "Start" button is configured to receive tactile input from the user 24 to initiate a vehicle engine-start request with the vehicle biometric system 20. The "Preferences" button is configured to receive tactile input from the user 24 to provide access to a further display configuration (e.g., as shown in FIG. 8D) having preference settings selections. The "Enroll" button is configured to receive tactile input from the user 24 to initiate an enrollment request with the vehicle biometric system 20. The "Unlock," "Start" and "Preferences" buttons can initiate the authentication state 44 in the vehicle biometric system 20, thus requiring authentication to determine authorization of the user 24 before the user 24 is granted access to actual vehicle control.

In one embodiment, as discussed herein, authentication, enrollment, or both can include prompting the user 24 to vocalize a test phrase. FIG. 8C depicts an exemplary display configuration having a visual test phrase prompt 168 (including an exemplary test phrase including "Green nineteen cow moon"), and a button, labeled "Record," configured to receive tactile input from the user 24 to initiate the wireless communication device 28 to record a vocalization of the test phrase and subsequently process the recording to generate the voice data of the authentication or enrollment data.

FIG. 8D depicts an exemplary embodiment of a display configuration at which the user 24 can use to enter vehicle preference settings. The depicted configuration includes buttons labeled "A/C" (corresponding to air conditioning settings such as coolness level, activation temperature, etc.), "Audio" (corresponding to audio settings such as radio station presents, speaker levels, panning, etc.), "Cruise" (corresponding to cruise control settings such as speed, deactivation input, etc.), "HUD" (corresponding to heads-up-display settings such as display content, brightness, location, etc.), "Windows" (corresponding to windows settings such as position, mode of raising and lowering, etc.), "Mirrors" (corresponding to mirrors settings such as position, night versus day angling, etc.), "Voice" (corresponding to vehicle voice feature settings such as voice type, volume, content, functions associated with voice, etc.), "Heat" (corresponding to heat settings such as fan level, activation temperature, etc.), "Doors" (corresponding to door settings such as locking and unlocking modes, etc.), "Seats" (corresponding to seat settings such as seat-base position, seat-back position, seat-back angle, etc.), "Ventilation" (corresponding to ventilation settings such as fan levels, interior and exterior air flow properties, etc.), "Navigation" (corresponding to navigation properties such as activation of points-of-interest information systems, etc.) and "Diagnostic" (corresponding to vehicle diagnostic settings such as frequency and content of diagnostic report and indication generation, communication of diagnostic reports internally and externally to the vehicle, etc.).

Note that FIGS. 8A-8D are exemplary embodiments of the touch-screen display 92a during use of the vehicle biometric system 20, and the display 92 of the wireless communication device 28 need not necessarily be a touch screen display 92a. Note also that the user interface 72 of the wireless communication device 28 need not necessarily rely on a display 92 to provide output and receive input from the user 24. Instead, e.g., the user interface 72 can provide output to the user using the speaker 96 of the wireless communication device 28 and receive input from the user using the microphone 72 of the wireless communication device 28. For example, the computer program instructions 64 of the wireless communication device 28 can include instructions that cause the processor 52 to perform speech recognition on vocal input received at the microphone 76 to detect a vehicle control request, such as in the form of a single spoke word such as "unlock" (which the wireless communication device 28 can also use as the vocal input from which the voice data of, e.g., the authentication data, is generated). Likewise, the computer program instructions 64 of the wireless communication device 28 can also include instructions that cause the processor 52 to perform a text-to-speech operation to generate a vocalized output to provide information to the user 24 using the speaker 96. Thus, many embodiments of the user interface 72 of the wireless communication device 28 are possible during the use of the vehicle biometric system 20.

Further embodiments, which are the result of subsets of elements of, or variously combining elements of, embodiments described herein, are also possible.
Possible embodiments are also described in the following:
Embodiment 1: A vehicle biometric system, comprising:
   an in-vehicle telematics unit comprising a receiver configured to receive authentication data from a wireless communication device, a memory configured to store computer program instructions, and a processor configured to access and
   execute the computer program instructions, wherein the authentication data includes voice data based on a vocal input received at the wireless communication device from a requesting user, and wherein the executed computer program instructions cause the processor to analyze the received authentication data to make a determination as to whether the vocal input is that of an authorized user of the vehicle, and based on a positive determination that the vocal input is that of the authorized user, to initiate a vehicle function in response to the vocal input.
Embodiment 2: The vehicle biometric system of embodiment 1, wherein memory is configured to store a user profile for the authorized user, the user profile including profile voice data, and wherein the analyzing of the authentication data includes comparing the received voice data to the stored profile voice data.
Embodiment 3: The vehicle biometric system of embodiment 2, wherein the received authentication data includes secondary identifier data based on a secondary identifier stored in the wireless communication device; and wherein the user profile stored in the memory includes profile secondary identifier data, and the analyzing of the authentication data includes comparing the received secondary identifier data to the stored profile secondary identifier data.
Embodiment 4: The vehicle biometric system of embodiment 3, wherein the secondary identifier includes at least one of: a number uniquely identifying the wireless communication device, a telephone number of the wireless communication device, or a manufacturer's serial number of the wireless communication device.
Embodiment 5: The vehicle biometric system of embodiment 3, wherein the in-vehicle telematics unit further comprises a transmitter configured to communicate with a remote server, and the executed computer program instructions cause the processor to control the transmitter to communicate with the remote server to request an additional user profile based on a determination that at least one of: the received voice data does not match the stored profile voice data, or that received secondary identifier data does not match the stored profile secondary identifier data.
Embodiment 6: The vehicle biometric system of embodiment 1, wherein the receiver of the in-vehicle telematics unit is configured to communicate with the wireless communication device via a short-range communication link.
Embodiment 7: The vehicle biometric system of embodiment 6, wherein the short-range communication link comprises a Wi-Fi communication link.
Embodiment 8: The vehicle biometric system of embodiment 1, wherein the receiver of the in-vehicle telematics unit is configured to communicate with the wireless communication device via a long-range communication link.
Embodiment 9: The vehicle biometric system of embodiment 8, wherein the long-range communication link comprises a cellular communication link.
Embodiment 10: The vehicle biometric system of embodiment 1, wherein the received voice data includes data processed by the wireless communication device to reduce a noise measure of the vocal input.
Embodiment 11: The vehicle biometric system of embodiment 1, wherein the received voice data includes a digital representation of the vocal input, generated using an analog-to-digital converter of the wireless communication device and being a compressed and encoded representation of the vocal input.
Embodiment 12: The vehicle biometric system of embodiment 1, wherein the received voice data includes a plurality of feature vectors having features extracted from the vocal input by the wireless communication device, each feature vector having a plurality of parameters.
Embodiment 13: The vehicle biometric system of embodiment 12, wherein the parameters of the feature vectors include at least one of: cepstrum coefficients, mel-cepstrum coefficients, delta-mel- ceptrum coefficients, line spectral pairs, reflection coefficients, or log area ratio coefficients.
Embodiment 14: The vehicle biometric system of embodiment 1, wherein the received voice data includes a plurality of partially generated feature vectors extracted from the vocal input by the wireless communication device.
Embodiment 16: The vehicle biometric system of embodiment 1, wherein the authentication data includes request data identifying a vehicle function associated with a user request.
Embodiment 17: The vehicle biometric system of embodiment 16, wherein the vehicle function includes providing for access to the vehicle for the requesting user.
Embodiment 18: The vehicle biometric system of embodiment 5, further comprising:
   the remote server comprising a receiver configured to receive the user profile request from the in-vehicle telematics unit, a memory configured to store computer program instructions and an additional user profile, a processor configured to access and execute the computer program instructions, and a transmitter configured to communicate with the in-vehicle telematics unit, and wherein the executed computer program instructions of the remote server cause the processor of the remote server to control the transmitter of the remote server to transmit the additional user profile to the in-vehicle telematics unit in response to the received user profile request.
Embodiment 19: A vehicle biometric system, comprising: a wireless communication device comprising a microphone configured to receive a vocal input from a requesting user, a memory configured to store computer program instructions, a processor configured to access and execute the computer program instructions, and a transmitter configured to communicate with an in-vehicle telematics unit; wherein the executed computer program instructions cause the processor to process the received vocal input to detect a vehicle control request by the requesting user and to generate authentication data including voice data, and to control the transmitter to transmit the authentication data to the in-vehicle telematics unit.
Embodiment 20: The vehicle biometric system of embodiment 19, wherein the authentication data includes request data identifying a vehicle function associated with the vehicle control request.
Embodiment 21: The vehicle biometric system of embodiment 20, wherein the vehicle function includes providing access to the vehicle for the requesting user.
Embodiment 22: The vehicle biometric system of embodiment 19, wherein the memory is configured to store a secondary identifier, and the executed computer program instructions cause the processor generate secondary identifier data based on the secondary identifier and control the transmitter to transmit the secondary identifier data to the in-vehicle telematics unit as part of the authentication data.
Embodiment 23: The vehicle biometric system of embodiment 22, wherein the secondary identifier includes at least one of: a number uniquely identifying the wireless communication device, a telephone number of the wireless communication device, or a manufacturer's serial number of the wireless communication device.
Embodiment 24: The vehicle biometric system of embodiment 28, wherein the
generating of the voice data includes processing the received vocal input to reduce an associated noise measure.
Embodiment 25: The vehicle biometric system of embodiment 24, wherein the reducing of the associated noise measure includes filtering the received voice data to reduce a signal magnitude over a predetermined range of frequencies.
Embodiment 26: The vehicle biometric system of embodiment 19, wherein the wireless communication device further comprises an analog-to-digital converter configured to convert the received vocal input to a digital representation.
Embodiment 27: The vehicle biometric system of embodiment 19, wherein the generating of the voice data includes processing the received vocal input to extract features to generate a plurality of feature vectors, each feature vector having a plurality of parameters, the generated voice data including the feature vectors.
Embodiment 28: The vehicle biometric system of embodiment 27, wherein the parameters include at least one of: cepstrum coefficients, mel-cepstrum coefficients,
delta-mel-ceptrum coefficients, line spectral pairs, reflection coefficients, or log area ratio coefficients.
Embodiment 29: The vehicle biometric system of embodiment 19, wherein the generating of the voice data includes processing the received vocal input to partially generate a plurality of feature vectors, the generated voice data including the partially-generated feature vectors.
Embodiment 30: The vehicle biometric system of embodiment 19, wherein the generating of the voice data includes processing the received vocal input to compress and encode the vocal input, the generated voice data including the compressed and encoded vocal input.
Embodiment 31: The vehicle biometric system of embodiment 19, wherein the wireless communication device further comprises a user interface including at least one of:
   a speaker or a display; and wherein the executed computer program instructions cause the processor to control the user interface to prompt the requesting user to vocalize a test phrase.
Embodiment 32: The vehicle biometric system of embodiment 31, wherein the user interface prompts the requesting user in response to the detecting of the vehicle control request from the user.
Embodiment 33: The vehicle biometric system of embodiment 31, wherein the memory is configured to store test phrase data, and the prompting of the user includes generating the test phrase from the stored test phrase data by the processor.
Embodiment 34: The vehicle biometric system of embodiment 31, wherein the prompting of the user includes controlling the transmitter by the processor to communicate with the in-vehicle telematics unit to determine the test phrase.
Embodiment 35: The vehicle biometric system of embodiment 31, wherein the prompting of the user includes controlling the transmitter by the processor to communicate with a remote server to determine the test phrase.
Embodiment 36: The vehicle biometric system of embodiment 19, wherein the transmitter is further configured to communicate with a remote server, and the executed computer program instructions cause the processor to process the received vocal input to detect an enrollment request by the requesting user, to generate a new user profile and to generate enrollment data including enrollment voice data and enrollment request data, and to control the transmitter to transmit the enrollment data to at least one of: the in-vehicle telematics unit, or a remote server.
Embodiment 37: The vehicle biometric system of embodiment 36, wherein the generating of the enrollment voice data includes processing the received vocal input to reduce an associated noise measure.
Embodiment 38: The vehicle biometric system of embodiment 36, wherein the generating of the enrollment voice data includes extracting features from the vocal input by the processor to generate a plurality of feature vectors, each feature vector having a plurality of parameters, the generated enrollment voice data including the feature vectors.
Embodiment 39: The vehicle biometric system of embodiment 38, wherein the parameters include at least one of: cepstrum coefficients, mel-cepstrum coefficients,
delta-mel-ceptrum coefficients, line spectral pairs, reflection coefficients, or log area ratio coefficients.
Embodiment 40: The vehicle biometric system of embodiment 36, wherein the wireless communication device further comprises a user interface including at least one of: a speaker or a display; and wherein the executed computer program instructions cause the processor to control the user interface to prompt the user to
vocalize a test phrase in response to the detecting of the new user profile request from the user.
Embodiment 41: The vehicle biometric system of embodiment 19, wherein the transmitter of the wireless communication device is configured to communicate with the in-vehicle telematics unit via a short-range communication link.
Embodiment 42: The vehicle biometric system of embodiment 41, wherein the short-range communication link comprises a Wi-Fi communication link.
Embodiment 43: The vehicle biometric system of embodiment 19, wherein the transmitter of the wireless communication device is configured to communicate with the in-vehicle telematics unit via a long-range communication link.
Embodiment 44: The vehicle biometric system of embodiment 43, wherein the long-range communication link comprises a cellular communication link.
Embodiment 45: A method, comprising:
   receiving authentication data by an in-vehicle telematics unit from a wireless communication device, the authentication data including voice data generated by a processor of the wireless communication device from a vocal input received at the wireless communication device from a requesting user;
   analyzing the received authentication data by a processor of the in-vehicle telematics unit to make a determination as to whether the vocal input is that of an authorized user of a vehicle having the in-vehicle telematics unit; and
   based on a positive determination that the vocal input is that of the authorized user,
   initiating a vehicle function in response to the vocal input.
Embodiment 46: The method of embodiment 45, wherein the authentication data includes request data identifying the vehicle function.
Embodiment 47: The method of embodiment 46, wherein the vehicle function includes providing access to the vehicle for the requesting user.
Embodiment 48: The method of embodiment 45, wherein the analyzing of the authentication data includes comparing the received voice data to profile voice data of a user profile stored in a memory of the in-vehicle telematics unit.
Embodiment 49: The method of embodiment 45, wherein the authentication data includes secondary identifier data generated by the processor of the wireless communication device from a secondary identifier stored in a memory of the wireless communication device, and the analyzing of the authentication data by the processor of the in-vehicle telematics unit includes comparing the received secondary identifier data to profile secondary identifier data of a user profile stored in a memory of the in-vehicle telematics unit.
Embodiment 50: The method of embodiment 49, further comprising: transmitting by a transmitter of the in-vehicle telematics unit to a remote server a request for an additional user profile based on a determination that at least one of: the received voice data does not match the user profile stored in the memory of the in-vehicle telematics unit, or that the received secondary identifier data does not match the user profile stored in the memory of the in-vehicle telematics unit.
Embodiment 51: The method of embodiment 50, further comprising:
   receiving by the remote server the user profile request from the in-vehicle telematics unit; and transmitting by a transmitter of the remote server the additional user profile to the in-vehicle telematics unit in response to the additional user profile request.
Embodiment 52: A method, comprising:
   receiving a vocal input from a requesting user at a microphone of a wireless communication device;
   processing the received vocal input by a processor of the wireless communication device to detect a vehicle control request by the requesting user;
   generating authentication data by the processor, the authentication data including voice data based on the vocal input; and
   transmitting by a transmitter of the wireless communication device the authentication data to the in-vehicle telematics unit.
Embodiment 53: The method of embodiment 52, wherein the authentication data includes request data identifying a vehicle function associated with the vehicle control request.
Embodiment 54: The method of embodiment 53, wherein the associated vehicle function includes providing access to the vehicle for the requesting user.
Embodiment 55: The method of embodiment 52, further comprising:
   generating by the processor of the wireless communication device secondary identifier data from a secondary identifier stored in a memory of the wireless communication device; and transmitting the secondary identifier data by the transmitter of the wireless communication device to the in-vehicle telematics unit as part of the authentication data.

## Claims

1. A vehicle biometric system, comprising:
a wireless communication device comprising a microphone configured to receive a vocal input from a requesting user, a memory configured to store computer program instructions, a processor configured to access and execute the computer program instructions, and a transmitter configured to communicate with an in-vehicle telematics unit;
wherein the executed computer program instructions cause the processor to process the received vocal input to detect a vehicle control request by the requesting user and to generate authentication data including voice data, and to control the transmitter to transmit the authentication data to the in-vehicle telematics unit.

2. The vehicle biometric system of claim₁, wherein the authentication data includes request data identifying a vehicle function associated with the vehicle control request.

3. The vehicle biometric system of claim 2, wherein the vehicle function includes providing access to the vehicle for the requesting user.

4. The vehicle biometric system of claims 1, 2 or 3, wherein the memory is configured to store a secondary identifier, and the executed computer program instructions cause the processor generate secondary identifier data based on the secondary identifier and control the transmitter to transmit the secondary identifier data to the in-vehicle telematics unit as part of the authentication data.

5. The vehicle biometric system of claim 4, wherein the secondary identifier includes at least one of: a number uniquely identifying the wireless communication device, a telephone number of the wireless communication device, or a manufacturer's serial number of the wireless communication device.

6. The vehicle biometric system of claim 2, wherein the generating of the voice data includes processing the received vocal input to reduce an associated noise measure.

7. The vehicle biometric system of claim 6, wherein the reducing of the associated noise measure includes filtering the received voice data to reduce a signal magnitude over a predetermined range of frequencies.

8. The vehicle biometric system of claims 1, 2, 3, 4 or 5, wherein the wireless communication device further comprises an analog-to-digital converter configured to convert the received vocal input to a digital representation.

9. The vehicle biometric system of claims 1, 2, 3, 4 or 5, wherein the generating of the voice data includes processing the received vocal input to extract features to generate a plurality of feature vectors, each feature vector having a plurality of parameters, the generated voice data including the feature vectors.

10. The vehicle biometric system of claim 9, wherein the parameters include at least one of: cepstrum coefficients, mel-cepstrum coefficients, delta-mel-ceptrum coefficients, line spectral pairs, reflection coefficients, or log area ratio coefficients.

11. The vehicle biometric system of claims 1, 2, 3, 4 or 5, wherein the generating of the voice data includes processing the received vocal input to partially generate a plurality of feature vectors, the generated voice data including the partially-generated feature vectors.

12. The vehicle biometric system of claim 1, 2, 3, 4 or 5, wherein the generating of the voice data includes processing the received vocal input to compress and encode the vocal input, the generated voice data including the compressed and encoded vocal input.

13. The vehicle biometric system of claims 1, 2, 3, 4, 5, 6, 7, 8, 9, 10, 11 or 12, wherein the wireless communication device further comprises a user interface including at least one of:
a speaker or a display; and
wherein the executed computer program instructions cause the processor to control the user interface to prompt the requesting user to vocalize a test phrase.

14. The vehicle biometric system of claim 13, wherein the user interface prompts the requesting user in response to the detecting of the vehicle control request from the user.

15. The vehicle biometric system of claim 13, wherein the memory is configured to store test phrase data, and the prompting of the user includes generating the test phrase from the stored test phrase data by the processor.

16. The vehicle biometric system of claim 13, wherein the prompting of the user includes controlling the transmitter by the processor to communicate with the in-vehicle telematics unit to determine the test phrase.

17. The vehicle biometric system of claim 13, wherein the prompting of the user includes controlling the transmitter by the processor to communicate with a remote server to determine the test phrase.

18. The vehicle biometric system of claim 1, wherein the transmitter is further configured to communicate with a remote server, and the executed computer program instructions cause the processor to process the received vocal input to detect an enrollment request by the requesting user, to generate a new user profile and to generate enrollment data including enrollment voice data and enrollment request data, and to control the transmitter to transmit the enrollment data to at least one of: the in-vehicle telematics unit, or a remote server.

19. The vehicle biometric system of claim 18, wherein the generating of the enrollment voice data includes processing the received vocal input to reduce an associated noise measure.

20. The vehicle biometric system of claim 18, wherein the generating of the enrollment voice data includes extracting features from the vocal input by the processor to generate a plurality of feature vectors, each feature vector having a plurality of parameters, the generated enrollment voice data including the feature vectors.

21. The vehicle biometric system of claim 20, wherein the parameters include at least one of: cepstrum coefficients, mel-cepstrum coefficients, delta-mel-ceptrum coefficients, line spectral pairs, reflection coefficients, or log area ratio coefficients.

22. The vehicle biometric system of claim 18, wherein the wireless communication device further comprises a user interface including at least one of:
a speaker or a display; and
wherein the executed computer program instructions cause the processor to control the user interface to prompt the user to vocalize a test phrase in response to the detecting of the new user profile request from the user.

23. The vehicle biometric system of any of the claims 1-22, wherein the transmitter of the wireless communication device is configured to communicate with the in-vehicle telematics unit via a short-range communication link.

24. The vehicle biometric system of claim 23, wherein the short-range communication link comprises a Wi-Fi communication link.

25. The vehicle biometric system of any of the claims 1-22, wherein the transmitter of the wireless communication device is configured to communicate with the in-vehicle telematics unit via a long-range communication link.

26. The vehicle biometric system of claim 25, wherein the long-range communication link comprises a cellular communication link.

27. A method, comprising:
receiving a vocal input from a requesting user at a microphone of a wireless communication device;
processing the received vocal input by a processor of the wireless communication device to detect a vehicle control request by the requesting user;
generating authentication data by the processor, the authentication data including voice data based on the vocal input; and
transmitting by a transmitter of the wireless communication device the authentication data to the in-vehicle telematics unit.

28. The method of claim 27, wherein the authentication data includes request data identifying a vehicle function associated with the vehicle control request.

29. The method of claim 28, wherein the associated vehicle function includes providing access to the vehicle for the requesting user.

30. The method of claim 30, further comprising:
generating by the processor of the wireless communication device secondary identifier data from a secondary identifier stored in a memory of the wireless communication device; and
transmitting the secondary identifier data by the transmitter of the wireless communication device to the in-vehicle telematics unit as part of the authentication data.
